# EUROPÄISCHE PATENTSCHRIFT

(11) **EP 3 371 420 B1**
(45) Veröffentlichungstag und Bekanntmachung des Hinweises auf die Patenterteilung: **20.05.2020**
(21) Anmeldenummer: 16790366.5
(22) Anmeldetag: 03.11.2016
(51) Int. Cl.: F01D 25/16, F01D 25/18, F02C 6/12

(54) **VORRICHTUNG ZUR TRENNUNG VON SCHMIERÖLSTRÖMEN UND ABGASTURBOLADER MIT EINER SOLCHEN VORRICHTUNG**
ARRANGEMENT FOR SEPARATION OF LUBRICANT FLOWS AND EXHAUST GAS TURBOCHARGER COMPRISING SUCH ARRANGEMENT
AGENCEMENT POUR SÉPARATION DES ÉCOULEMENTS D'HUILE LUBRIFIANTE ET TURBOCOMPRESSEUR AYANT UN TEL AGENCEMENT

(30) Priorität: 05.11.2015 DE 102015118996
(43) Veröffentlichungstag der Anmeldung: 12.09.2018
(73) Patentinhaber: ABB Turbo Systems AG, 5400 Baden (CH)
(72) Erfinder: VACCA, Andrea, 5242 Lupfig (CH); SCHMID, Andreas, 77793 Gutach (DE); RECHIN, Thomas, 5400 Baden (CH)
(74) Vertreter: Zimmermann & Partner Patentanwälte mbB
(86) Internationale Anmeldenummer: PCT/EP2016/076501
(87) Internationale Veröffentlichungsnummer: WO 2017/076943

(56) Entgegenhaltungen:
- EP-A1- 2 792 855
- US-A1- 2004 213 663

## Beschreibung

### Technisches Gebiet

Die Erfindung bezieht sich auf das Gebiet von Abgasturboladern.

Sie betrifft eine Vorrichtung zur Trennung von Schmierölströmen innerhalb eines Schmieröl aufnehmenden Lagergehäuses eines Abgasturboladers und einen Abgasturbolader mit einer solchen Vorrichtung.

Ein Abgasturbolader nutzt die Abgase eines Verbrennungsmotors um die dem Verbrennungsmotor zuzuführende Verbrennungsluft zu verdichten. Durch diese Vorverdichtung bzw. Aufladung der Verbrennungsluft werden die Füllmenge und damit auch das Kraftstoffgemisch in den Zylindern des Motors erhöht, so dass eine deutliche Steigerung des Wirkungsgrads des Motors erzielt werden kann. Der in diesem Zusammenhang genutzte Abgasturbolader setzt sich standardmäßig aus einem Rotor, bestehend aus einem Turbinenrad, einem Verdichterrad, sowie einer diese Bauteile verbindenden Welle, einer Lagerung und feststehenden Gehäuseteilen wie einem Turbinengehäuse, einem Verdichtergehäuse und dem die Lagerung aufnehmenden Lagergehäuse zusammen.

Die innerhalb des Lagergehäuses befindliche Lagerung eines Abgasturboladers umfasst standardmäßig zwei Radiallager und ein Axiallager, zu deren Schmierung jeweils Schmieröl durch dafür vorgesehene Leitungen zugeführt wird. Das Schmieröl übernimmt neben einer Schmierfunktion auch eine Kühlfunktion gegenüber im Turbinengehäuse vorliegenden Betriebstemperaturen, die je nach Betriebspunkt bis zu 600°C bis 1000°C erreichen können. Um zu verhindern, dass Schmieröl in die angrenzenden Gehäuse des Verdichters oder der Turbine gelangt, verfügt das Lagergehäuse über entsprechende Dichtungen, wie beispielsweise Kolbenringe, sowie Ölfangkammersysteme. In den Ölfangkammern gesammeltes Schmieröl wird mittels der Schwerkraft in eine unterhalb der Welle befindliche Ölablauföffnung geleitet.

### Stand der Technik

Die Turbine eines Abgasturboladers kann als eine Radialturbine, bei welcher der Abgasstrom im Wesentlichen bezüglich der Rotorachse radial von außen kommend in Richtung des Turbinenrades geleitet wird, oder als eine Axialturbine gegeben sein. In letzterem Fall wird die Turbine von den sie antreibenden Abgasen des Motors axial angeströmt. Durch einen in Gasströmrichtung hinter dem Turbinenrad der Axialturbine befindlichen Gasaustritt des Turbinengehäuses werden die Abgase, zunächst ebenfalls in axialer Richtung, abgeführt. Der entsprechende axial verlaufende Abschnitt des Gasaustritts umgibt einen an das Turbinengehäuse anschließenden Teil des Lagergehäuses. Der radiale Abstand dieses axial verlaufenden Turbinengehäuseteils von der Welle ist durch den Radius des Turbinenrades vorgegeben. Durch diesen vorgegebenen radialen Abstand bedingt, steht dem an das Turbinengehäuse anschließenden Lagergehäusebereich ein geringerer Raum zur Verfügung als dem verdichterseitigen Lagergehäusebereich. Der dem Turbinengehäuse benachbarte Teil des Lagergehäuses verjüngt sich damit entlang der Welle in Richtung zu der Turbine hin in seiner radialen Ausdehnung. Eine solche Verjüngung beeinflusst die Platzverhältnisse um die in diesem Bereich des Lagergehäuses befindlichen Lager und damit die Abflussmöglichkeiten für durch die Lager gefördertes Schmieröl. Ein Beispiel eines solchen Abgasturboladers wird in Dokument EP 2792855 A1 offenbart.

Der Anteil des durch die Axiallagerung geförderten Schmieröls übersteigt die durch die Radiallager geförderten Mengen. Durch die Radiallager gefördertes Schmieröl tritt zunächst im Wesentlichen in axialer Richtung relativ zur Welle aus den Radiallagern aus. Demgegenüber wird ein Großteil des durch das Axiallager geförderten Schmieröls mit hohen Geschwindigkeiten radial nach außen geschleudert und trifft auf die umgebenden Wände des Lagergehäuses. Die Anordnung des Axiallagers relativ zu den Radiallagern sowie insbesondere die Platzverhältnisse um das Axiallager beeinflussen dabei die Möglichkeiten der Ölabfuhr.

Im Folgenden sei auf eine Anordnung der Lager längs der Welle eines Turboladers mit Axialturbine Bezug genommen, bei der auf ein verdichterseitiges Radiallager zunächst das Axiallager und anschließend ein turbinenseitiges Radiallager folgen. Bei einer anderen Anordnung der Lager entlang der Welle, beispielsweise einer Konstellation mit verdichterseitig angeordnetem Axiallager und in Richtung der Turbine nachfolgend entlang der Welle befindlichen Radiallagern, tritt die im Folgenden beschriebene Problematik zweier sich beeinflussender Schmierölströme nicht in dieser Form auf.

Bei Verwendung der Begriffe "oberhalb" und "unterhalb" der Welle wird im Folgenden auf ein Bezugssystem zurückgegriffen, in dem der Turbolader auf einer horizontalen Fläche steht und die Welle des Turboladers damit waagerecht verläuft. Die Angaben "oberhalb" und "unterhalb" sind in diesem Zusammenhang bezüglich der Vertikalen, d.h. der durch die Schwerkraft gegebenen Richtung, zu verstehen. Die tatsächliche Ausrichtung des Turboladers bei Einbau kann von der vorbeschriebenen horizontalen Ausrichtung abweichen.

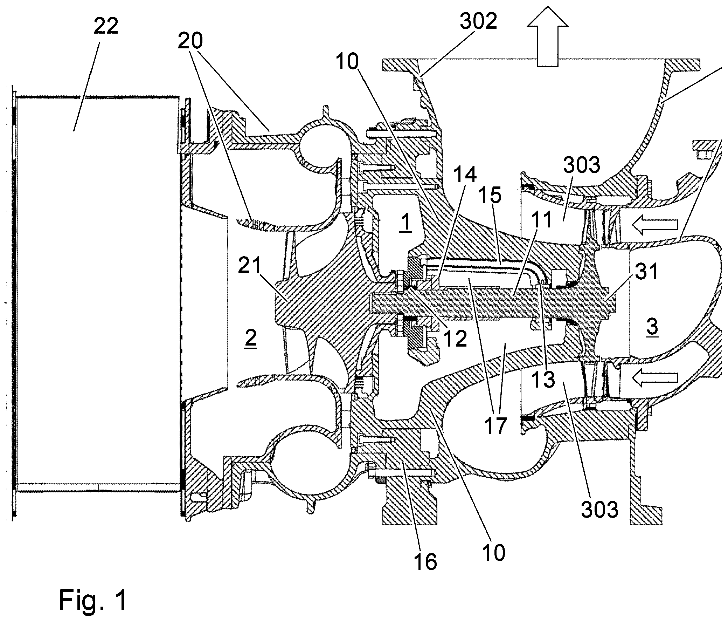

Ein schematischer Aufbau eines Turboladers nach dem Stand der Technik mit Axialturbine 3 sowie zwischen dem verdichterseitigem Radiallager 12 und dem turbinenseitigem Radiallager 13 angeordnetem Axiallager 14 ist der Fig. 1 zu entnehmen. Das durch das Axiallager 14 in den, bezüglich der Vertikalen oberhalb der Welle 11 und zwischen Axiallager 14 und turbinenseitigem Radiallager 13 befindlichen Raum geförderte Schmieröl wird vornehmlich gegen die Wände des Lagergehäuses 10 geschleudert, die den Bereich des Axiallagers in radialer Richtung begrenzen. Dieses Schmieröl läuft von dort entlang der Wände in Richtung der Turbinenseite. Dort prallt es auf den Sitz des turbinenseitigen Radiallagers 13 und fliesst schließlich, durch die Schwerkraft getrieben, in den verjüngten Bereich unterhalb des turbinenseitigen Radiallagersitzes-. Ein Abfluss bzw. Ablauf 16 für diesen Schmierölstrom ist typischerweise im Bereich unterhalb des verdichterseitigen Radiallagers 12 angeordnet. Unterhalb von Axiallager 14 und turbinenseitigem Radiallager 13 eintreffendes Schmieröl wird aufgrund der Form der Innenwände des Lagergehäuses 10, die sich in Richtung des Verdichters 2 weiten, d.h. einen grösser werdenden radialen Abstand von der Welle annehmen, wiederum schwerkraftgetrieben in Richtung des Abflusses 16 geleitet.

Die große Menge des Schmieröls, welches vom Axiallager 14 in Richtung des turbinenseitigen Radiallagers 13 befördert wird, führt vor dem Sitz des turbinenseitigen Radiallagers zur Ausbildung eines Vorhangs aus Schmieröl. Dieses Schmieröl strömt von den dort befindlichen Gehäusewänden durch die Schwerkraft getrieben in einen unterhalb der Welle befindlichen Bereich, und wird schließlich entlang der sich weitenden Gehäusewandungen in Richtung des Ablaufs 16 geführt. Durch diesen Schmierölstrom wird das Schmieröl, welches vom turbinenseitigen Radiallager 13 gefördert wird, seinerseits am Abfließen in Richtung des Ablaufs 16 gehindert. Dies führt zu einem Schmierölstau auf der Turbinenseite des Lagergehäuses und kann zu Undichtheiten gegenüber dem Turbinengehäuse führen. Aufgrund hoher Prozesstemperaturen auf der Turbinenseite können bei angestautem Schmieröl im direkt an das Turbinengehäuse angrenzenden Bereich des Lagergehäuses auch Verkokungen auftreten.

### Kurze Darstellung der Erfindung

Der Erfindung, wie sie in Anspruch 1 definiert ist, liegt die Aufgabe zugrunde, eine Vorrichtung anzugeben, durch die ein Schmierölstau innerhalb eines Schmieröl aufnehmenden Lagergehäuse eines Abgasturboladers am Sitz des turbinenseitigen Radiallagers verhindert wird und durch die der Abfluss des Schmieröls am Sitz des turbinenseitigen Radiallagers verbessert wird. Die Erfindung betrifft auch einen in Anspruch 9 definierten Abgasturbolader mit dieser Vorrichtung. Im Zusammenhang der Erfindung wird auf Öl innerhalb des Lagergehäuses Bezug genommen, das eine Schmierfunktion übernimmt. Werden im Folgenden die Begriffe Öl oder Ölstrom verwendet, so sind diese als gleichbedeutend zu Schmieröl oder Schmierölstrom zu verstehen.

Bei der Vorrichtung gemäß der Erfindung ist zumindest im bezüglich der Vertikalen oberhalb der Welle befindlichen Bereich des Zwischenraums zwischen Axiallager und turbinenseitigem Radiallager mindestens ein radial von der Lagergehäuseinnenwand in den Zwischenraum hineinragender Wandvorsprung gegeben. Dieser mindestens eine Wandvorsprung unterteilt den Zwischenraum zumindest in seinem bezüglich der Schwerkraft oberhalb der Welle befindlichen Bereich in einen an das Axiallager angrenzenden Bereich und einen an das turbinenseitige Radiallager angrenzenden Bereich. Durch den mindestens einen Wandvorsprung können die Ölströme von Axiallager und turbinenseitigem Radiallager getrennt und damit eine gegenseitige Beeinflussung dieser Ölströme verhindert werden. Der Ölstrom des Axiallagers wird direkt in einen Bereich des Lagergehäuses umgeleitet, der vom turbinenseitigen Radiallager in Richtung des Axiallagers hin versetzt ist. Die Hemmung bzw. Aufstauung des Ölstroms des turbinenseitigen Radiallagers durch den Ölstrom vom Axiallager kann dadurch verringert und der Abfluss des Ölstroms vom turbinenseitigen Radiallager in Richtung des Ölablaufs verbessert werden. Damit wird insbesondere auch die Effizienz der turbinenseitigen Wellendichtung, die turbinenseitig des turbinenseitigen Radiallagers angeordnet ist, gesteigert.

Zur weiteren Steigerung der Effizienz der turbinenseitigen Wellendichtung durch verbesserten Ölablauf können in Kombination mit dem vorgenannten Wandvorsprung zusätzlich axial verlaufende Ablaufnuten vorgesehen sein. Diese Ablaufnuten können in der Lagergehäusewand, welche das turbinenseitige Radiallager in seiner axialen Erstreckung umgibt, bezüglich der Schwerkraft oberhalb der Wellenachse angebracht sein. Durch diese Ablaufnuten wird eine Verbindung zwischen dem Zwischenraum zwischen Axiallager und turbinensseitigem Radiallager und dem turbinenseitig des turbinenseitigen Radiallagers befindlichen Raum hergestellt. Die Ablaufnuten dienen als zusätzliche Ablauffläche, indem sie einen Teil des durch das turbinenseitige Radiallager geförderten Öls von dem turbinenseitig des Radiallagers befindlichen Raum in Richtung des Zwischenraums zwischen Axiallager und turbinenseitigem Radiallager befördern. Damit ermöglichen die Ablaufnuten eine weitere Aufteilung des durch das turbinenseitige Radiallager geförderten Ölstroms. Der aus den Ablaufnuten kommende Ölstrom ist durch den in den Zwischenraum zwischen Axiallager und turbinenseitigem Radiallager ragenden Wandvorsprung insbesondere vom Ölstrom des Axiallagers getrennt und kann durch letzteren nicht gehemmt werden.

### Kurze Beschreibung der Zeichnungen

Anhand von Figuren ist nachfolgend ein Ausführungsbeispiel einer Vorrichtung zur Trennung von Ölströmen nach der Erfindung dargestellt und näher erläutert. In den Figuren sind Elemente mit gleicher Wirkung mit gleichen Bezugszeichen versehen. Es zeigt
- Fig. 1: eine schematische Darstellung eines Abgasturboladers mit Axialturbine nach dem Stand der Technik, dessen Gehäuse längs der Rotorachse aufgeschnitten ist,
- Fig. 2: eine schematische Schnittdarstellung der Lageranordnung entlang der Welle sowie umgebender Lagergehäuseteile mit einem Wandvorsprung zur Trennung der Schmierölströme des Axiallagers und des turbinenseitigen Radiallagers,
- Fig. 3: eine schematische Schnittdarstellung nach Fig. 2 mit einem weiteren Wandvorsprung zur Trennung der Schmierölströme von Axiallager und turbinenseitigem Radiallager, und
- Fig. 4: eine isometrische Schnittdarstellung des turbinenseitigen Radiallagers und des Bereichs des Lagergehäuses, welcher das turbinenseitige Radiallager in radialer Richtung umgibt.

### Weg zur Ausführung der Erfindung

Fig. 1 zeigt ein schematisches Schnittbild eines Abgasturboladers nach dem Stand der Technik mit Verdichter 2, Lagerung 1, und Axialturbine 3, mit den feststehenden Gehäusekomponenten Verdichtergehäuse 20, Lagergehäuse 10 und Turbinengehäuse 30. Ein Verdichterrad 21, ein Turbinenrad 31, sowie eine Verdichter- und Turbinenrad miteinander verbindende Welle 11 sind Bestandteil des Rotors des Abgasturboladers. Die Welle 11 ist von dem das Verdichterrad 21 aufnehmenden Verdichtergehäuse 20 durch das Lagergehäuse 10 in das Turbinengehäuse 30 geführt, welches das Turbinenrad 31 aufnimmt. Desweiteren ist als ein optionales Bauteil des Abgasturboladers ein Filterschalldämpfer 22 gezeigt, der an das Verdichtergehäuse anschließt und der Dämpfung erheblicher Schallpegel am Ort des Verdichterrades bei Betrieb des Abgasturboladers dient.

An den durch die Rotordurchführung bedingten Übergängen zwischen den drei oben genannten feststehenden Gehäusekomponenten befinden sich Dichtvorrichtungen. Diese Dichtvorrichtungen sollen das Eindringen eines Massenstromes von Verdichter- oder Turbinenseite, aufgrund dort eventuell vorliegender höherer Prozessdrücke, in das Lagergehäuse verhindern. Zur Abdichtung des Lagergehäuses gegenüber einem Massenstrom von Verdichter- oder Turbinenseite kann desweiteren ein Sperrluftsystem innerhalb des Lagergehäuses genutzt werden. Die Dichtvorrichtungen sollen darüber hinaus das Austreten von Schmieröl aus dem Lagergehäuse in die Turbine oder den Verdichter verhindern. Dabei dient das Schmieröl der Schmierung der Lager des Rotors, kann aber auch zu Kühlzwecken gegenüber turbinenseitig hohen Arbeitstemperaturen genutzt werden.

Die in Fig. 1 dargestellte Lagerung der Welle 11 innerhalb des Lagergehäuses 10 weist ein verdichterseitiges Radiallager 12, ein turbinenseitiges Radiallager 13, sowie ein zwischen den beiden Radiallagern angeordnetes Axiallager 14 auf. Diese Lager werden jeweils durch Ölzufuhrleitungen 15 mit Schmieröl versorgt. Vermittels der Schwerkraft gelangt das zugeführte Schmieröl schließlich in einen, bezüglich der Vertikalen unterhalb der Welle befindlichen, Bereich des Innenraums des Lagergehäuses. In diesem Bereich ist, unterhalb des verdichterseitigen Radiallagers 12, ein Ölablauf 16 angeordnet.

Turbinenseitig weist der Turbolader ein Gaseintrittsgehäuse 301 sowie ein Gasaustrittsgehäuse 302 der als Axialturbine ausgeführten Turbine 3 auf. Die Richtungen des die Axialturbine 3 anströmenden und des abströmenden Abgases sind in Fig. 1 durch entsprechende Pfeile dargestellt. Der durch das Gasaustrittsgehäuse definierte Gasaustrittskanal besitzt in Gasströmrichtung unmittelbar hinter dem Turbinenrad einen im Wesentlichen axial verlaufenden Abschnitt 303. Dieser Abschnitt umgibt einen Teil des Lagergehäuses umfänglich und bedingt, dass der radiale Querschnitt des Lagergehäuses sich in axialer Richtung von der Verdichter- zur Turbinenseite hin verjüngt. Dadurch ergibt sich eine entsprechende Verjüngung des Zwischenraumes 17 zwischen Welle 11 und Innenwänden des Lagergehäuses 10 im Bereich von Axiallager 14 und turbinenseitigem Radiallager 13.

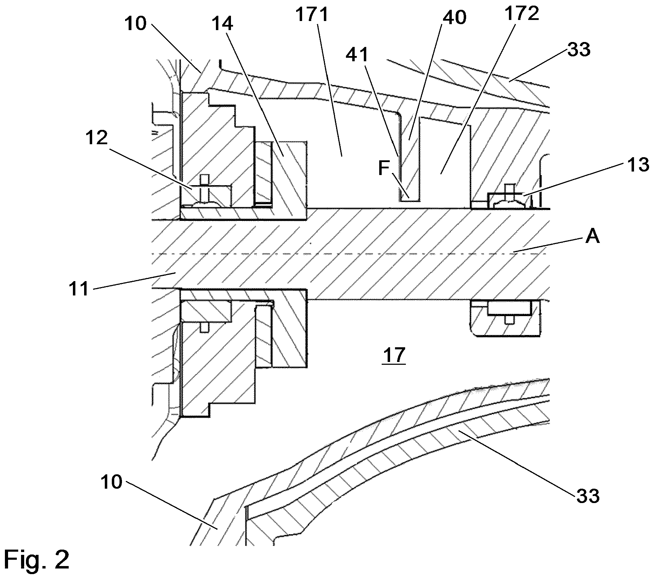

Eine Ausführungsform der Erfindung ist in der Fig. 2 schematisch dargestellt. Gezeigt ist ein Schnittbild eines Teils des Lagergehäuses 10 mit hindurchgeführter Welle 11, verdichterseitigem Radiallager 12, turbinenseitigem Radiallager 13 und Axiallager 14. Das Gasaustrittsgehäuse 302 der Turbine beschränkt das Lagergehäuse 10 im dargestellten Bereich in seiner radialen Ausdehnung, so dass sich insbesondere der Zwischenraum 17 innerhalb des Lagergehäuses in axialer Richtung zur Turbine hin verjüngt. Gemäß einem Ausführungsbeispiel der Erfindung ist ein Wandvorsprung 40 vorgesehen, der in radialer Richtung von der Lagergehäusewand nach innen in den Zwischenraum 17 hineinragt. Dieser Wandvorsprung 40 kann zumindest im bezüglich der Vertikalen oberhalb der Welle befindlichen Teil des Zwischenraums 17 in Form eines Teilrings ausgebildet sein, der die Welle entsprechend teilringförmig umgibt. Bezüglich der Vertikalen gemessen kann der Teilring beispielsweise jeweils über einen Winkelbereich von +35° bis -35°, +45° bis -45° oder +55° bis -55° in einer Ebene senkrecht zur Achse A der Welle 11 erstreckt sein.

Eine weitere (nicht dargestellte) Option für die Form des Wandvorsprungs 40 besteht in einem die Welle vollständig umgebenden, d.h. ganz um die Welle geführten, ringförmigen Wandvorsprung. Der ringförmige Wandvorsprung ist dabei mit den Lagergehäusewänden im oberhalb der Welle 11 befindlichen Bereich des Zwischenraums 17 verbunden. Im unterhalb der Welle 11 befindlichen Bereich des Zwischenraums 17 darf der ringförmige Wandvorsprung nicht zu einer erneuten Hemmung des Ölstroms führen, der vom turbinenseitigen Radiallager 13 kommend in Richtung des Ölabflusses unterhalb des verdichterseitigen Radiallagers 12 fließt. Dazu kann zumindest in einem Teil des Bereichs unterhalb der Welle 11 ein Abstand zwischen dem äußeren Rand des ringförmigen Wandvorsprungs und den bezüglich der Schwerkraft unterhalb des äußeren Randes des ringförmigen Wandvorsprungs angeordneten Wandpartien des Lagergehäuses gegeben sein. In anderen Worten sollte zwischen dem Wandvorsprung und den Lagergehäusewänden im unterhalb der Welle befindlichen Bereich zumindest keine durchgehende Verbindung bestehen. Insbesondere im Bereich des unterhalb des Wandvorsprungs und bezüglich der Schwerkraft am tiefsten gelegenen Punktes der Lagergehäusewände ist ein Abstand zwischen den Lagergehäusewänden und dem ringförmigen Wandvorsprung vorzusehen. Damit kann ein ungehemmter Ablauf des Ölstroms vom turbinenseitigen Radiallager 13 in Richtung des Ölabflusses gewährleistet werden. Es kann weiterhin vorteilhaft sein, dass der unterhalb der Welle 11 befindliche Bereich des ringförmigen Wandvorsprungs bezüglich der Vertikalen in Richtung der Verdichterseite hin geneigt ist. In diesem Fall wird von der Axialturbine gefördertes Öl, welches auf den ringförmigen Wandvorsprung trifft, bereits durch den geneigten Teil des Wandvorsprungs in Richtung des Ölablaufs gelenkt. Durch den von dem geneigten Bereich des Wandvorsprungs in Richtung des Ölabflusses strömenden Ölstrom kann sich für den von dem turbinenseitigen Radiallager kommenden Ölstrom eine vorteilhafte Sogwirkung ergeben. Die Sogwirkung kann zu einem weiteren verbesserten Abfluss des Öls führen, das durch das turbinenseitige Radiallager 13 in Richtung des Abflusses strömt.

Zwischen der der Welle zugewandten Fläche F des Wandvorsprungs 40 und der Welle 11 ist ein radialer Abstand vorgesehen, so dass die Welle 11 durch den Wandvorsprung 40 nicht in ihrem Rotationsverhalten beeinträchtigt wird. Durch einen Wandvorsprung 40 mit den zuvor beschriebenen Eigenschaften kann verhindert werden, dass ein Großteil des Schmieröls, welches durch das Axiallager 14 in den oberhalb der Welle 11 befindlichen Zwischenraum 17 befördert wird, bis zum Sitz des turbinenseitigen Radiallagers 13 gelangt. Stattdessen kann dieses Schmieröl an der dem Axiallager 14 zugewandten Stirnfläche 41 des Wandvorsprungs 40 mittels der Schwerkraft ablaufen. Dadurch kann dieses Schmieröl direkt in einen unterhalb der Welle befindlichen Bereich des Zwischenraums 17 fließen, der gegenüber dem stark verjüngten Bereich am Sitz des turbinenseitigen Radiallagers 13 einen größeren radialen Querschnitt aufweist. Der durch das turbinenseitige Radiallager 13 geförderte Schmierölstrom trifft in diesem Fall nicht mehr direkt am turbinenseitigen Radiallagersitz auf den volumenmäßig viel größeren Ölstrom von Seiten des Axiallagers 14. Dadurch wird in vorteilhafter Weise eine Trennung der beiden Schmierölströme erreicht. Diese Trennung hat einen besseren Abfluss des Schmieröls in Richtung des Ölablaufs zur Folge und ermöglicht die Vermeidung ölstaubedingter Undichtigkeiten an der turbinenseitigen Dichtpartie des Lagergehäuses.

Zur weiteren Verbesserung des Ablaufs von durch das Axiallager 14 gefördertem Schmieröl an der Stirnfläche 41 des Wandvorsprungs 40 kann der Wandvorsprung bzw. die Stirnfläche 41 eine besonders glatte bzw. beschichtete Oberfläche aufweisen.

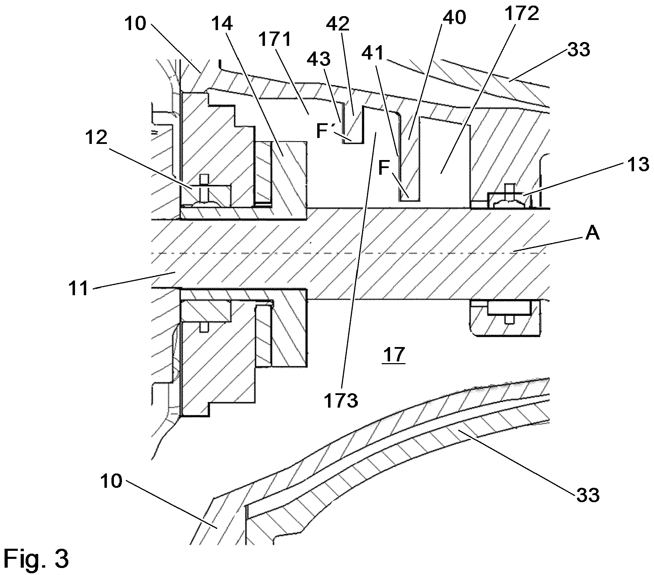

In Fig. 3 ist ein weiteres Ausführungsbeispiel gemäß der Erfindung dargestellt. Der gezeigte Ausschnitt des Lagergehäuses entspricht dem der oben beschriebenen Fig. 2. Zusätzlich zu dem in Fig. 2 gezeigten Wandvorsprung 40 ist ein weiterer Wandvorsprung 42 dargestellt, der gegenüber dem Wandvorsprung 40 in axialer Richtung zum Axiallager 14 hin versetzt angeordnet ist. Auch dieser zweite Wandvorsprung 42 kann als ein radial in den Zwischenraum 17 hineinragender Teilring ausgeführt sein, der die Welle zumindest teilweise umschießt. Der Winkelbereich, über den der teilringförmige zweite Wandvorsprung sich in einer Ebene senkrecht zur Achse A der Welle erstreckt, kann dem Winkelbereich entsprechen, über den sich der erste, teilringförmige Wandvorsprung 40 in einer entsprechenden parallelen Ebene erstreckt. Es ist jedoch auch möglich, dass der Winkelbereich, über den sich der zweite Wandvorsprung 42 erstreckt, versetzt zu dem Winkelbereich, über den sich der erste Wandvorsprung erstreckt, angeordnet ist. Auch können der erste Wandvorsprung 40 sowie der zweite Wandvorsprung 42 in Form von Kreisringsegmenten ausgeführt sein, welche in einem bestimmten Winkelbereich unterbrochen sind. Beispielsweise kann der zweite Wandvorsprung 40 in einer Ebene senkrecht zur Achse A der Welle 11 von der Vertikalen aus gemessen zwischen -45° und 45° ausgebildet sein und damit einen Winkelbereich von 90° abdecken. Der erste Wandvorsprung kann in Form eines unterbrochenen Kreisringsegments mit zwei Teilstücken ausgebildet sein. Die beiden Teilstücke können sich in einer Ebene senkrecht zur Achse A der Welle 11 von der Vertikalen aus gemessen in einem Winkelbereich von beispielsweise 30° bis 80° und von -80° bis -30° erstrecken. Durch jedes der beiden Teilstücke wird in diesem Beispiel damit jeweils einen Winkelbereich von 50° abgedeckt. Es ist auch möglich, dass einer der beiden Wandvorsprünge in Form eines oben beschriebenen, ringförmigen, d.h. die Welle vollständig umgebenden, Wandvorsprungs gegeben ist. Weiterhin können beide Wandvorsprünge als ringförmige Wandvorsprünge gegeben sein. Wie nachfolgend beschrieben, kann durch derartige Konfigurationen des ersten Wandvorsprungs und des zweiten Wandvorsprungs eine weitere Aufteilung der vom Axiallager geförderten Mengen Schmieröls bewirkt werden.

Der radiale Abstand zwischen der Welle 11 und der der Welle zugewandten Seite des zweiten Wandvorsprungs 42 kann weiterhin, wie in der Fig. 3 dargestellt, größer gewählt sein, als der entsprechende Abstand im Falle des ersten Wandvorsprungs 40. Durch eine solche Anordnung der beiden Wandvorsprünge kann von dem Axiallager 14 gefördertes Schmieröl, das an die bezüglich der Vertikalen oberhalb der Achse A der Welle 11 befindlichen Wandpartien des Lagergehäuses geschleudert wird, zunächst auf den zweiten Wandvorsprung 42 treffen und an diesem ablaufen. Ein Teil dieses Öls tropft auf die Welle und wird infolgedessen wiederum in vornehmlich radialer Richtung an die Wände des Zwischenraums 17 geschleudert. Insbesondere wird dieses Öl auch an die Wandpartien zwischen dem zweiten Wandvorsprung 42 und dem in radialer Richtung weiter in den Zwischenraum 17 hineinragenden ersten Wandvorsprung 40 geschleudert. Dieses Öl kann an der Ablauffläche 41 des ersten Wandvorsprungs in den unterhalb der Welle befindlichen Teil des Zwischenraums 17 ablaufen. Der radiale Abstand zwischen der der Welle zugewandten Seite F des ersten Wandvorsprungs 40 kann dabei derart gewählt sein, dass Öl, welches von der Ablauffläche 41 auf die Welle tropft, nicht in den Bereich des Zwischenraums 172 geschleudert werden kann, der an das turbinenseitige Radiallager 14 angrenzt.

Durch Einfügen des zweiten Wandvorsprungs 42 zusätzlich zu dem ersten Wandvorsprung 40 kann eine weitere Aufteilung des durch das Axiallager geförderten Schmieröls erreicht werden. Diese Aufteilung des Schmierölstroms vom Axiallager kann durch eine geeignete Kombination der Ausgestaltungen des ersten und des zweiten Wandvorsprungs unter Umständen weiter verbessert werden. Dies kann beispielsweise durch eine oben beschriebene Kombination der beiden Wandvorsprünge geschehen, bei welcher Kombination der erste oder der zweite Wandvorsprung in Form eines unterbrochenen Kreisringsegments mit zwei Teilstücken ausgeführt ist.

Wie im Fall der Stirnfläche 41 des ersten Wandvorsprungs 40, kann die Stirnfläche 43 des zweiten Wandvorsprungs 42 eine besonders glatte oder beschichtete Oberfläche aufweisen und damit einen verbesserten Schmierölablauf ermöglichen.

Durch den ersten Wandvorsprung 40 und durch den zweiten Wandvorsprung 42 werden, wie in Fig. 3 dargestellt, zumindest im Bereich des Zwischenraums 17 oberhalb der Welle 11 insgesamt drei Teilbereiche des Zwischenraums 17 voneinander abgetrennt. Der erste Teilbereich 171 des Zwischenraums 17 ist in seiner axialen Erstreckung von dem Axiallager 14 und dem zweiten Wandvorsprung 42 begrenzt. Der zweite Teilbereich 172 des Zwischenraums wird in seiner axialen Erstreckung durch den ersten Wandvorsprung 40 und den Sitz des turbinenseitigen Radiallagers 13 begrenzt. Schließlich ist die Begrenzung der axialen Erstreckung des dritten Teilbereichs 173 durch den ersten und den zweiten Wandvorsprung gegeben.

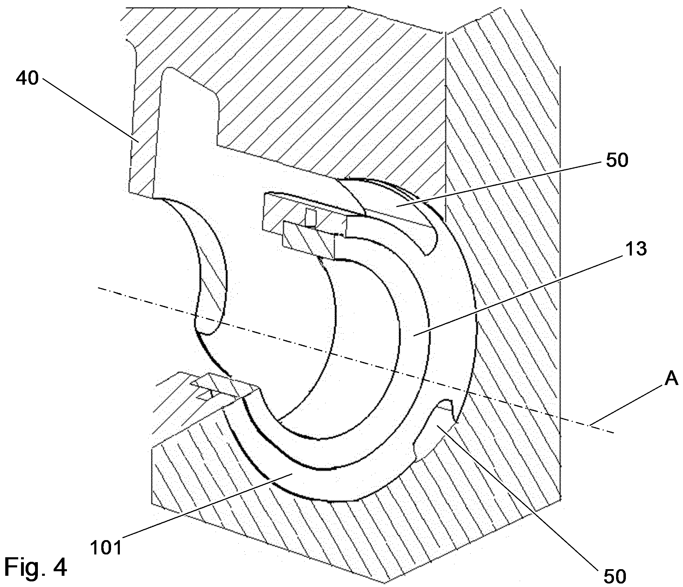

Im Zusammenspiel mit einer der im Zusammenhang der Fig. 2 und 3 beschriebenen Ausführungsbeispiele der Erfindung kann weiterhin eine Konfiguration des Lagergehäuses am Sitz des turbinenseitigen Radiallagers 13 wie in Fig. 4 dargestellt vorgesehen sein. Fig. 4 zeigt ein schematisches isometrisches Schnittbild des turbinenseitigen Radiallagers 13 mit einem Teil des umgebenden Lagergehäuses 101, von der Turbinenseite gesehen. Im Lagergehäuse 101 oberhalb der Achse A der Welle befindet sich mindestens eine im Wesentlichen axial zur Welle verlaufende Ablaufnut 50. Die Ablaufnut 50 stellt eine fluide Verbindung für einen Schmierölfluss zwischen dem turbinenseitig an den turbinenseitigen Radiallagersitz anschließenden Raum und dem Teilbereich 172 des Zwischenraums 17 her. Insbesondere sind in der Fig. 4 zwei Ablaufnuten 50 dargestellt. Dabei ist eine der dargestellten zwei Ablaufnuten 50 bezüglich der Schwerkraft oberhalb der Achse A der Welle angeordnet, die andere der zwei Ablaufnuten 50 ist bezüglich der Schwerkraft unterhalb der Achse A der Welle angeordnet. Die Ablaufnuten 50 sind innerhalb eines als Ring ausgebildeten Lagergehäusebereichs 101 angeordnet, der das turbinenseitige Radiallager 13 umschliesst. Von der Vertikalen aus gemessen, können die Ablaufnuten in einer Ebene senkrecht zur Achse A der Welle in einem Winkelbereich von jeweils 25° bis 70° bzw. - 25° bis -70° sowie 115° bis 160° bzw. -115° bis -160° angeordnet sein. Insbesondere können zusätzlich zu den dargestellten zwei Ablaufnuten weitere Ablaufnuten in dem Lagergehäusebereich 101 angeordnet sein. Es können auch beispielsweise nur im oberhalb der Achse A der Welle befindlichen Lagergehäusebereich 101 Ablaufnuten 50 angeordnet sein, oder entsprechend nur im unterhalb der Achse A befindlichen Lagergehäusebereich.

Zur Erleichterung der Ableitung von Schmieröl mittels der Schwerkraft durch die Ablaufnuten in Richtung des Teilbereichs 172 des Zwischenraumes 17, kann eine entsprechende (nicht dargestellte) Neigung der mindestens einen Nut 50 zum Zwischenraum 172 hin vorgesehen sein. Auch ist es möglich, das der turbinenseitig an das turbinenseitige Radiallager 13 anschließende Raum im Bereich der Ablaufnuten zusätzlich in axialer und radialer Richtung erweitert ist, um einen Zufluss von Schmieröl zu den Ablaufnuten 50 hin zu erleichtern.

Bei einer Konfiguration mit einem ersten und einem zwei Wandvorsprung 40, 42 wie in Fig. 3 dargestellt, kann weiterhin durch eine Ablaufnut 50 ein Ablauf von Schmieröl in den Teilbereich 172 des Zwischenraums 17 zwischen turbinenseitigem Radiallager 13 und erstem Wandvorsprung 40 gegeben sein. Weiterhin kann in diesem Fall durch eine zweite Ablaufnut 50 ein Ablauf von Schmieröl in den Teilbereich 173 zwischen dem ersten und dem zweiten Wandvorsprung gegeben sein.

### Bezugszeichenliste

- 1: Lagerung
- 10: Lagergehäuse
- 11: Welle
- 12: verdichterseitiges Radiallager
- 13: turbinenseitiges Radiallager
- 101: Lagergehäuse am Sitz des turbinenseitigen Radiallagers
- 14: Axiallager
- 15: Ölzufuhrleitungen
- 16: Ölablauf
- 17: Zwischenraum
- 171: erster abgetrennter/axiallagerseitiger Teilbereich des Zwischenraums
- 172: zweiter abgetrennter/radiallagerseitiger Teilbereich des Zwischenraums
- 173: dritter abgetrennter Teilbereich des Zwischenraums
- 2: Verdichter
- 20: Verdichtergehäuse
- 21: Verdichterrad
- 22: Filterschalldämpfer
- 3: Axialturbine
- 30: Turbinengehäuse
- 31: Turbinenrad
- 301: Gaseintrittsgehäuse
- 302: Gasaustrittsgehäuse
- 303: axial verlaufender Abschnitt des Gasaustrittsgehäuses
- 40: erster Wandvorsprung
- 41: Ablauffläche/axiallagerseitige Stirnfläche des ersten Wandvorsprungs
- 42: zweiter Wandvorsprung
- 43: Ablauffläche/axiallagerseitige Stirnfläche des zweiten Wandvorsprungs
- A: Achse der Welle
- F: der Welle zugewandte Fläche des ersten Wandvorsprungs
- F': der Welle zugewandte Fläche des zweiten Wandvorsprungs
- 50: Ablaufnut

## Patentansprüche

1. Vorrichtung zur Trennung von zwei Schmierölströmen innerhalb eines Schmieröl aufnehmenden Lagergehäuses (10) eines Abgasturboladers, innerhalb dessen eine Welle (11) gelagert ist, die von einem einerseits an das Lagergehäuse angrenzenden Turbinengehäuse (30) durch das Lagergehäuse hindurch zu einem andererseits angrenzenden Verdichtergehäuse (20) geführt ist, umfassend
zwei Radiallager der Welle, ein turbinenseitiges Radiallager (13) und ein verdichterseitiges Radiallager (12), zwischen denen sich ein Axiallager (14) der Welle befindet,
einen Zwischenraum (17), der in seiner axialen Erstreckung einerseits durch das Axiallager und andererseits durch das turbinenseitige Radiallager und in seiner radialen Erstreckung durch einen sich in Richtung des turbinenseitigen Radiallagers verjüngenden Wandabschnitt des Lagergehäuses begrenzt ist,
einen im Bereich bezüglich der Schwerkraft unterhalb des verdichterseitigen Radiallagers (12) angeordneten Ölablauf (16), der mittels der Schwerkraft in den bezüglich der Schwerkraft unterhalb der Welle befindlichen Bereich des Zwischenraums befördertes Schmieröl aus dem Lagergehäuse ableitet,
**dadurch gekennzeichnet, dass** mindestens ein erster von der Wand des Lagergehäuses radial nach innen in den Zwischenraum (17) hineinragender Wandvorsprung (40) ausgebildet ist, der gegenüber dem turbinenseitigen Radiallager (13) in Richtung des Axiallagers (14) axial versetzt ist, und dessen dem Axiallager zugewandte Seite eine Ablauffläche (41) für durch das Axiallager befördertes Schmieröl bereitstellt, wobei der Wandvorsprung (40) den Zwischenraum (17) zumindest in einem bezüglich der Schwerkraft oberhalb der Welle befindlichen Bereich in einen an das Axiallager (14) angrenzenden Teilbereich (171) und einen an das turbinenseitige Radiallager (13) angrenzenden Teilbereich (172) unterteilt.

2. Vorrichtung nach Anspruch 1, **dadurch gekennzeichnet, dass** der mindestens eine erste Wandvorsprung (40) die Welle (11) zumindest in einem bezüglich der Schwerkraft oberhalb der Welle befindlichen Bereich des Zwischenraums (17) in Form eines Kreisringsegments umgibt, und ein radialer Abstand zwischen der Welle und der der Welle zugewandten Seite (F) des Wandvorsprungs gegeben ist.

3. Vorrichtung nach Anspruch 2, **dadurch gekennzeichnet, dass** ein zweiter in Form eines Kreisringsegments ausgeformter Wandvorsprung (42) radial nach innen in den Zwischenraum (17) ragt, wobei der zweite Wandvorsprung (42) gegenüber dem ersten Wandvorsprung (40) in Richtung des Axiallagers hin axial versetzt ist, und wobei die der Welle (11) zugewandte Seite (F') des zweiten Wandvorsprungs (42) einen größeren radialen Abstand von der Welle besitzt als die der Welle zugewandte Seite (F) des ersten Wandvorsprungs (40).

4. Vorrichtung nach Anspruch 3, **dadurch gekennzeichnet, dass** der erste Wandvorsprung (40) und/oder der zweite Wandvorsprung (42) die Welle (11) ringförmig umgibt, wobei der ringförmige erste Wandvorsprung (40) und/oder der ringförmige zweite Wandvorsprung (42) zumindest in einem bezüglich der Schwerkraft unterhalb der Welle (11) befindlichen Bereich nicht mit den Wänden des Lagergehäuses verbunden ist, um in diesem Bereich die Durchführung von Schmieröl zu ermöglichen.

5. Vorrichtung nach einem der Ansprüche 1 bis 4, **dadurch gekennzeichnet, dass** zur Durchführung von Schmieröl von einem turbinenseitig des turbinenseitigen Radiallagers (13) angeordneten Raum in Richtung des vom Axiallager (14) abgetrennten Teilbereichs des Zwischenraums (172) in der oberhalb des turbinenseitigen Radiallagers (13) befindlichen Wand des Lagergehäuses in axialer Richtung mindestens eine Ablaufnut (50) angebracht ist, wobei die mindestens eine Ablaufnut (50) eine Verbindung zwischen dem turbinenseitig des turbinenseitigen Radiallagers (13) ausgebildeten und von einer Lagergehäusewand begrenzten Raum und dem Teilbereich des Zwischenraums (172) herstellt, welcher durch den mindestens einen Wandvorsprung (40) von dem Axiallager (14) getrennten ist.

6. Vorrichtung nach Anspruch 5, **dadurch gekennzeichnet, dass** zumindest zwei Ablaufnuten (50) in einem Teilringsegment des Lagergehäuses, bezüglich der Schwerkraft oberhalb des turbinenseitigen Radiallagers (13) angeordnet sind, wobei das Teilringsegment des Lagergehäuses das turbinenseitige Radiallager (13) umgibt, und wobei sich die zumindest zwei Ablaufnuten in einem von der Vertikalen aus gemessenen Winkelintervall von +25° bis +70° bzw. von -25° bis -70° befinden.

7. Vorrichtung nach Anspruch 5 oder 6, **dadurch gekennzeichnet, dass** der turbinenseitig des turbinenseitigen Radiallagers (13) befindliche Raum in Richtung der mindestens einen Ablaufnut (50) oberhalb des turbinenseitigen Radiallagers in radialer und axialer Richtung erweitert ist.

8. Vorrichtung nach einem der vorhergehenden Ansprüche, **dadurch gekennzeichnet, dass** die Ablauffläche für durch das Axiallager (14) befördertes Schmieröl, die durch die dem Axiallager zugewandte Seite (41) des mindestens einen Wandvorsprungs (40) bereitgestellt ist, zumindest teilweise geglättet oder beschichtet ist.

9. Abgasturbolader mit einer Vorrichtung nach einem der Ansprüche 1 bis 8.

## Claims

1. Device for separating two lubricating oil flows within a bearing housing (10), which accommodates lubricating oil, of an exhaust-gas turbocharger, within which bearing housing there is mounted a shaft (11) which is guided through the bearing housing from a turbine housing (30), which adjoins the bearing housing on one side, to a compressor housing (20), which adjoins the bearing housing on the other side, comprising
two radial bearings of the shaft, a turbine-side radial bearing (13) and a compressor-side radial bearing (12), between which an axial bearing (14) of the shaft is situated,
an intermediate space (17) which is delimited in terms of its axial extent on one side by the axial bearing and on the other side by the turbine-side radial bearing and in terms of its radial extent by a wall portion, which tapers in the direction of the turbine-side radial bearing, of the bearing housing, an oil outflow (16) which is arranged in the region below the compressor-side radial bearing (12) with respect to gravitational force and which discharges lubricating oil, which has been conveyed by means of gravitational force into that region of the intermediate space which is situated below the shaft with respect to gravitational force, from the bearing housing,
**characterized in that** at least one first wall projection (40) is formed which projects from the wall of the bearing housing radially inwards into the intermediate space (17), which wall projection is axially offset relative to the turbine-side radial bearing (13) in the direction of the axial bearing (14), and that side of which wall projection which faces towards the axial bearing provides a run-off surface (41) for lubricating oil conveyed through the axial bearing, wherein the wall projection (40) divides the intermediate space (17), at least in a region situated above the shaft with respect to gravitational force, into a subregion (171) adjoining the axial bearing (14) and a subregion (172) adjoining the turbine-side radial bearing (13).

2. Device according to Claim 1, **characterized in that**, at least in a region, which is situated above the shaft with respect to gravitational force, of the intermediate space (17), the at least one first wall projection (40) surrounds the shaft (11) in the form of a circular ring segment, and a radial spacing is provided between the shaft and that side (F) of the wall projection which faces towards the shaft.

3. Device according to Claim 2, **characterized in that** a second wall projection (42) shaped in the form of a circular ring segment projects radially inwards into the intermediate space (17), wherein the second wall projection (42) is axially offset relative to the first wall projection (40) in the direction of the axial bearing, and wherein that side (F') of the second wall projection (42) which faces towards the shaft (11) has a greater radial spacing to the shaft than that side (F) of the first wall projection (40) which faces towards the shaft.

4. Device according to Claim 3, **characterized in that** the first wall projection (40) and/or the second wall projection (42) surrounds the shaft (11) in ring-shaped fashion, wherein, at least in a region situated below the shaft (11) with respect to gravitational force, the ring-shaped first wall projection (40) and/or the ring-shaped second wall projection (42) is not connected to the walls of the bearing housing, in order to permit the leadthrough of lubricating oil in said region.

5. Device according to any of Claims 1 to 4, **characterized in that**, for the leadthrough of lubricating oil from a space arranged on the turbine side of the turbine-side radial bearing (13) in the direction of that subregion of the intermediate space (172) which is separated from the axial bearing (14), at least one outflow groove (50) is formed in an axial direction **in that** wall of the bearing housing which is situated above the turbine-side radial bearing (13), wherein the at least one outflow groove (50) produces a connection between the space which is formed on the turbine side of the turbine-side radial bearing (13), and which is delimited by a bearing housing wall, and that subregion of the intermediate space (172) which is separated from the axial bearing (14) by the at least one wall projection (40).

6. Device according to Claim 5, **characterized in that** at least two outflow grooves (50) are arranged in a partial ring segment of the bearing housing, above the turbine-side radial bearing (13) with respect to gravitational force, wherein the partial ring segment of the bearing housing surrounds the turbine-side radial bearing (13), and wherein the at least two outflow grooves are situated in an angular interval, measured from the vertical, of +25° to +70° and of -25° to -70° respectively.

7. Device according to Claim 5 or 6, **characterized in that** the space situated on the turbine side of the turbine-side radial bearing (13) is widened in a radial and axial direction in the direction of the at least one outflow groove (50) above the turbine-side radial bearing.

8. Device according to any of the preceding claims, **characterized in that** the run-off surface for lubricating oil conveyed through the axial bearing (14), which run-off surface is provided by that side (41) of the at least one wall projection (40) which faces towards the axial bearing, is at least partially smoothed or coated.

9. Exhaust-gas turbocharger having a device according to any of Claims 1 to 8.

## Revendications

1. Dispositif de séparation de deux flux d'huile de lubrification à l'intérieur d'un logement de palier (10) recevant de l'huile de lubrification d'un turbocompresseur à gaz d'échappement, à l'intérieur duquel est supporté un arbre (11) qui est guidé à travers le logement de palier depuis un boîtier de turbine (30) adjacent d'une part au logement de palier jusqu'à un boîtier de compresseur (20) adjacent d'autre part, comprenant :
deux paliers radiaux de l'arbre, un palier radial côté turbine (13) et un palier radial côté compresseur (12) entre lesquels se trouve un palier axial (14) de l'arbre,
un espace intermédiaire (17) qui est limité dans son étendue axiale d'une part par le palier axial et d'autre part par le palier radial côté turbine et dans sa direction radiale par une portion de paroi du logement de palier se rétrécissant dans la direction du palier radial côté turbine,
un écoulement d'huile (16) disposé, par rapport à la force de pesanteur, dans la région en dessous du palier radial côté compresseur (12), qui dévie, au moyen de la force de pesanteur hors du logement de palier, l'huile de lubrification refoulée dans la région de l'espace intermédiaire se trouvant par rapport à la force de pesanteur en dessous de l'arbre,
**caractérisé en ce qu'**au moins une première saillie de paroi (40) pénétrant radialement vers l'intérieur dans l'espace intermédiaire (17) est réalisée depuis la paroi du logement de palier, laquelle est décalée axialement par rapport au palier radial côté turbine (13) dans la direction du palier axial (14) et dont le côté tourné vers le palier axial fournit une surface d'écoulement (41) pour l'huile de lubrification refoulée par le palier axial, la saillie de paroi (40) divisant l'espace intermédiaire (17) au moins en une région se trouvant au-dessus de l'arbre par rapport à la force de pesanteur en une région partielle (171) adjacente au palier axial (14) et une région partielle (172) adjacente au palier radial côté turbine (13).

2. Dispositif selon la revendication 1, **caractérisé en ce que** l'au moins une première saillie de paroi (40) entoure l'arbre (11) au moins dans une région de l'espace intermédiaire (17) en forme de segment annulaire circulaire se trouvant au-dessus de l'arbre par rapport à la force de pesanteur, et il existe une distance radiale entre l'arbre et le côté (F) de la saillie de paroi tourné vers l'arbre.

3. Dispositif selon la revendication 2, **caractérisé en ce qu'une** deuxième saillie de paroi (42) en forme de segment annulaire circulaire fait saillie radialement vers l'intérieur dans l'espace intermédiaire (17), la deuxième saillie de paroi (42) étant décalée axialement dans la direction du palier axial par rapport à la première saillie de paroi (40), et le côté (F') de la deuxième saillie de paroi (42) tourné vers l'arbre (11) possède une plus grande distance radiale à l'arbre que le côté (F) de la première saillie de paroi (40) tourné vers l'arbre.

4. Dispositif selon la revendication 3, **caractérisé en ce que** la première saillie de paroi (40) et/ou la deuxième saillie de paroi (42) entourent l'arbre (11) sous forme annulaire, la première saillie de paroi annulaire (40) et/ou la deuxième saillie de paroi annulaire (42), au moins dans une région se trouvant en dessous de l'arbre (11) par rapport à la force de pesanteur, n'étant pas connectées aux parois du logement de palier afin de permettre le passage d'huile de lubrification dans cette région.

5. Dispositif selon l'une quelconque des revendications 1 à 4, **caractérisé en ce que** pour le passage d'huile de lubrification depuis un espace disposé du côté turbine du palier radial côté turbine (13) dans la direction de la région partielle de l'espace intermédiaire (172) séparée du palier axial (14) au moins une rainure d'écoulement (50) est réalisée dans la paroi du logement de palier se trouvant au-dessus du palier radial côté turbine (13) dans la direction axiale, l'au moins une rainure d'écoulement (50) créant une liaison entre l'espace réalisé du côté turbine du palier radial côté turbine (13) et limité par une paroi de logement de palier et la région partielle de l'espace intermédiaire (172), qui est séparée par l'au moins une saillie de paroi (40) du palier axial (14) .

6. Dispositif selon la revendication 5, **caractérisé en ce qu'**au moins deux rainures d'écoulement (50) sont disposées dans un segment annulaire partiel du logement de palier, au-dessus du palier radial côté turbine (13) par rapport à la force de pesanteur, le segment annulaire partiel du logement de palier entourant le palier radial côté turbine (13), et les au moins deux rainures d'écoulement se trouvant dans un intervalle angulaire mesuré à partir de la verticale de +25° à +70° ou de -25° à -70°.

7. Dispositif selon la revendication 5 ou 6, **caractérisé en ce que** l'espace se trouvant du côté turbine du palier radial côté turbine (13) est élargi dans la direction de l'au moins une rainure d'écoulement (50) au-dessus du palier radial côté turbine dans la direction radiale et dans la direction axiale.

8. Dispositif selon l'une quelconque des revendications précédentes, **caractérisé en ce que** la surface d'écoulement pour l'huile de lubrification refoulée par le palier axial (14), qui est fournie par le côté (41) de l'au moins une saillie de paroi (40) tourné vers le palier axial, est au moins en partie lissée ou revêtue.

9. Turbocompresseur à gaz d'échappement comprenant un dispositif selon l'une quelconque des revendications 1 à 8.
